# EUROPEAN PATENT SPECIFICATION

(11) **EP 3 210 464 B1**
(45) Date of publication and mention of the grant of the patent: **29.04.2020**
(21) Application number: 16157839.8
(22) Date of filing: 29.02.2016
(51) Int. Cl.: A01K 3/00

(54) **MOBILE HORIZONTAL ELECTRIC FENCE GRID**
MOBILER HORIZONTALER ELEKTROZAUN MIT GITTER
GRILLE DE CLÔTURE ÉLECTRIQUE MOBILE ET HORIZONTAL

(43) Date of publication of application: 30.08.2017
(73) Proprietor: Gallagher Europe B.V., 9723 AZ Groningen (NL)
(72) Inventor: Dijkstra, Meindert Egbert, 9723 Groningen (NL)
(74) Representative: Eisenführ Speiser

(56) References cited:
- WO-A1-2013/049226
- GB-A- 2 044 325
- US-A- 520 510
- US-A- 1 539 177
- US-A- 3 790 135
- US-A1- 2002 092 481

## Description

The invention is directed to an apparatus and a method for preventing animals to enter or leave a separated area through an opening of the separated area.

According to the state of the art areas which are separated by protective fences are known. For example, areas like agricultural land is separated with protective fences of this type in order to protect the livestock grazing on the land from wild animals existing in the region. In particular, in the dairy industry, protective fences are utilized in order to protect milk cows from wild animals, such as boars or wolfs.

However, due to the increasing of population and of diseases of animals, like wild animals, crop land and domestic animals are separated by protective fences for the protection of respectively crop land, in particular, corn crop land or domestic animals.

Furthermore, separated areas are employed in order to protect rurally located installations from damage, which can be caused by wild animals. The use of protective fences for separating the areas thereby extends from the protection of housing space, in particular, in the suburbs of cities and communities, to the protection of industrially or economically used land, respectively installations, such as forestry, stables, biogas plants or wind energy plants.

In summary, fences are used to separate animals from people or land and wild animals from domestic animals or vice versa.

The known separated areas, however, need for service purposes openings to the separated areas, respectively openings in the fence of the separated areas. In particular, the openings are needed to enter or leave the separated areas by people or vehicles to farm or cultivate stables or crop land or to enter or leave separated housing space.

Therefore, according to the state of the art fences are arranged with areas where the fence can be temporarily opened to allow people or vehicles to enter or leave the separated areas. However, the fences have to be opened and closed whenever people or vehicles intend to enter or leave.

In fact, to open and close the fence whenever people or vehicles intend to enter or leave the separated area is very time consuming and sometimes leads to situations where people do not close the fence caused by ease. Such situations are very dangerous because the area which has to be separated is unprotected and wild animals can cross the opening in the fence in such situations. US 2002/0092481 A1 discloses a nonconductive insulated substrate material to form a mat which is set on the ground in the area spanned by a gate. The mat however comprises conductive wires for energizing. Moreover, US 3,790,135 discloses a cattle guard comprising a plurality of spaced and parallel sills having a plurality of spaced and parallel cross member pipes secured at right angles to the sills with vertical gusset plates welded between adjacent cross member pipes and upon the sill pipes to provide an integral unit. WO 2013/049226 A1 discloses a wildlife exclusion system for railway tracks. The exclusion arrangement extends generally perpendicular to the railway tracks and has a series of conductive elements spaced apart from each other to provide an electric shock to wild animals when particular conductive elements within the exclusion area are bridged thereby.

Consequently, it is an object of the present invention to provide a solution for the known disadvantages of the state of the art. In particular, it is an object of the present invention to prevent animals, especially wild animal like wolfs, to enter or leave a separated area through an opening of the separated area.

The object is solved by the inventive apparatus according to claim 1 for preventing animals to enter or leave a separated area through an opening of the separated area. The opening is for example an opening of a fence of the separated area to separate the area.

The apparatus comprises a grid made from metal bars, wherein the grid is adapted to be energized. Further, the grid forms an area or plane with an upper side and a lower side. Moreover, the apparatus comprises an electrically insulating material arranged at least partly on the lower side of the grid, wherein the insulating material is arranged to completely separate the grid from a ground at least during horizontal arrangement of the grid on a horizontal ground.

Due to the grid which can be energized and is electrically insulated from the ground, people can pass the grid whereas animals get an electro shock. This is because animals have four legs and therefore, at least two legs have contact with the ground, when an animal tries to cross the apparatus. In fact, an animal will get an electro shock when trying to cross apparatus.

Thus, the apparatus can be positioned in an opening of a separated area, preferably in an opening of a fence of the separated area. People or vehicles can enter or leave the separated area without opening a fence and without getting an electro shock.

According to a first embodiment of the invention, the grid consists of a main grid section and at least two side grid sections. Each of the sections comprises the electrically insulating material arranged on the lower side of the grid. Further, the main grid section is arranged to be connectable with the side grid sections with connections on each of the opposite ends of the main section.

By arranging the apparatus in at least three sections, the apparatus is easier to transport. Thus, the apparatus can be provided temporarily in different openings, easily. In example, the apparatus can be positioned on an opening of a separated crop land which has to be harvested. During harvesting vehicles have to enter and leave the separated area several times. The fence to the land has to be opened only once before harvesting. After completion of harvesting of the land the fence of the land can be closed and the grid can be positioned on the next opening of another separated area which has to be harvested the next.

According to a further embodiment, the connections between the main grid section and the side grid sections are each pivot joints.

Due to pivot joints the side grid sections can be folded towards the main grid section during transport of the apparatus. During use the side grid sections can be folded back to maximize the dimension of the apparatus which improves the insurmountability of the apparatus. Thus, it is easy to change between a transport configuration and a use configuration of the apparatus
According to a further embodiment, the connections between the main grid section and the side grid sections are each detachable connectable connections.

By the detachable connectable connections, the sections can be secured from sliding apart due to heavy vehicles during use but can be easily transported due to separation of the sections.

According to a further embodiment, the area of each side grid section is smaller than or equal to the half area of the main grid section. By a smaller size than the half area of the main grid section or a size equal to the half area of the main grid section each side grid section can be folded towards the main grid section until the upper side of the side grid sections contacts the main grid section. Therefore, the dimensions of the apparatus can be optimally reduced for transporting.

According to a further embodiment, the thickness of the insulating material of the main grid section is substantially constant. Further, the thickness of the insulating material of each of said side grid sections decreases beginning from the end of the connection with the main grid section to the respective opposite end of the side grid section, namely the outer ends of the apparatus.

By the decreasing thickness of the insulating material up to the outer ends of the side grid sections, a thicker insulating material of the main grid section is possible on the one hand and to allow vehicles to pass the apparatus without climbing high edges on the outer ends on the other hand. A thicker insulating material of the main grid section lifts the grid of the main grid section so that it is more difficult for animals to pass the apparatus.

According to a further embodiment, the metal bars of the main grid section and the side grid sections are a plurality of parallel arranged first steel bars. The first steel bars are preferably flat steel bars. Furthermore, the first steel bars of each section extend from one end of the respective section to the respective opposite end of the respective section.

Moreover, the grid of the main grid section and the side grid sections are each formed by a plurality of parallel arranged second steel bars. The second steel bars are preferably round steel bars. Further, the second steel bars extend perpendicular to the first steel bars.

Thus, the first and second steel bars form rectangular planes or areas with a plurality of cross-sections of the bars and a plurality of clearances respectively between four cross-sections.

Thus, the grid can be manufactured very easy. By using round steel bars as second steel bars, it is more difficult for animals to balance on the grid and therefore, more difficult to pass. Using flat steel bars as first steel bars makes it easier to position and attach the round steel bars during manufacturing. Further, flat steel bars have the advantage that the insulating material can be easier attached to it.

According to a further embodiment, the contact areas of the first steel bars with the second steel bars are each connected by welding. By welding the first and the second steel bars substantially in their cross-sections, the stability of the grid is ensured.

According to a further embodiment, the insulating material is formed by bars arranged on the lower side of the grid sections in parallel to the first steel bars. The bars from insulating material are preferably in contact and/or connected with the first steel bars by screws or bolts. By bars of insulating material which are only arranged below the first steel bars, the clearances of the grid are open to a ground on which the apparatus is positioned during use. Consequently, it is more difficult for animals to balance on the grid, especially on the round steel bars.

According to a further embodiment, the grid is made from steel, wherein the steel is galvanized. Steel can be easily connected by welding and is relatively inexpensive. Further, a galvanization ensures a corrosion immunity.

According to a further embodiment, the insulating material is made from wood. The wood is preferably hard wood. In particular, the wood is insutimber. Insutimber is a special wood from Gallagher Europe. Wood is easy to handle and form. Additionally, wood has a high specific resistance and thus, wood is a good electric insulating material.

According to a further embodiment, the connections are made from stainless steel. Although stainless steel is more expensive than galvanized steel, the connections are moving parts and thus, a galvanisation of the connections is not very stable. Consequently, stainless steel ensures a durable corrosion immunity of the moving parts.

According to a further embodiment, the plane of the main grid section has a rectangular shape and a size of at least 2 by 2 meter. Preferably, the size of the main grid section is at least 2 by 3 meter. Alternatively or additionally, the clearances formed between four of the cross sections of the steel bars have a minimum with of 8, preferably 10 cm.

According to a further embodiment, each of the planes of the side grid sections has a rectangular shape and a size of at least 0.5 by 2 meter. Preferably, the size of each of the side grid sections is at least 0.8 by 3 meter. Alternatively or additionally, the clearances formed between four of the cross sections of the steel bars have a minimum with of 8, preferably 10 cm.

By choosing the minimum sizes of the grids according to the above embodiments, it is impossible for animals to pass the apparatus by jumping over it. The minimum size of the clearances makes it more difficult for animals to balance on the bars, because a foot of an animal can make contact with a maximum of one first or/and one second bar at a point in time, only.

According to a further embodiment, the apparatus comprises an energizer which is directly connected to the grid or which is connected with an electrical fence which then is connected to the grid. Consequently, the grid is energized by an energizer.

According to a further embodiment, the apparatus comprises a mesh which is electroconductive. The mesh is adapted to be arranged below the grid and has at least a plane area which is equal to or greater than the grid or the main section of the grid.

This mesh can be connected to a ground connection of an energizer or to an electroconductive bar which can be inserted into a ground. Thus, the mesh is a kind of a counter electrode to the grid of the apparatus and therefore, people who want to pass the apparatus can balance on the bars and therefore will not get in contact with the mesh and consequently, will not get an electric shock. Animals which cannot easy balance on the bars and therefore step through the clearances between the bars will get a shock when they are partly in contact with the grid and with the mesh. The mesh is in particular helpful, when the grid is positioned on a ground which is not electrically grounded or electroconductively connected to a ground potential, namely for example an asphalt street. The clearances of the mesh are significantly smaller than the clearances of the grid. Thus, animals which step through a clearance of the grid will get in contact with the mesh, certainly.

Further, the invention comprises a method for preventing animals to enter or leave a separated area through an opening of the separated area. The invention makes use of an apparatus according to any of the preceding embodiments.

According to the method, the apparatus is positioned on the ground in the area of the opening of the separated area. Further, the grid of the apparatus is energized with an energizer.

Due to the method people can pass the grid whereas animals get an electro shock. In particular, people or vehicles can enter or leave a separated area without opening a fence and without getting an electro shock.

Further, features and advantages of the invention arise from the following description of preferred embodiments wherein reference is made to the drawings:
- Fig. 1: shows a perspective view of an embodiment of the apparatus,
- Fig. 2: a top view of an embodiment of the apparatus, and
- Fig. 3: a side view of an embodiment of the apparatus.

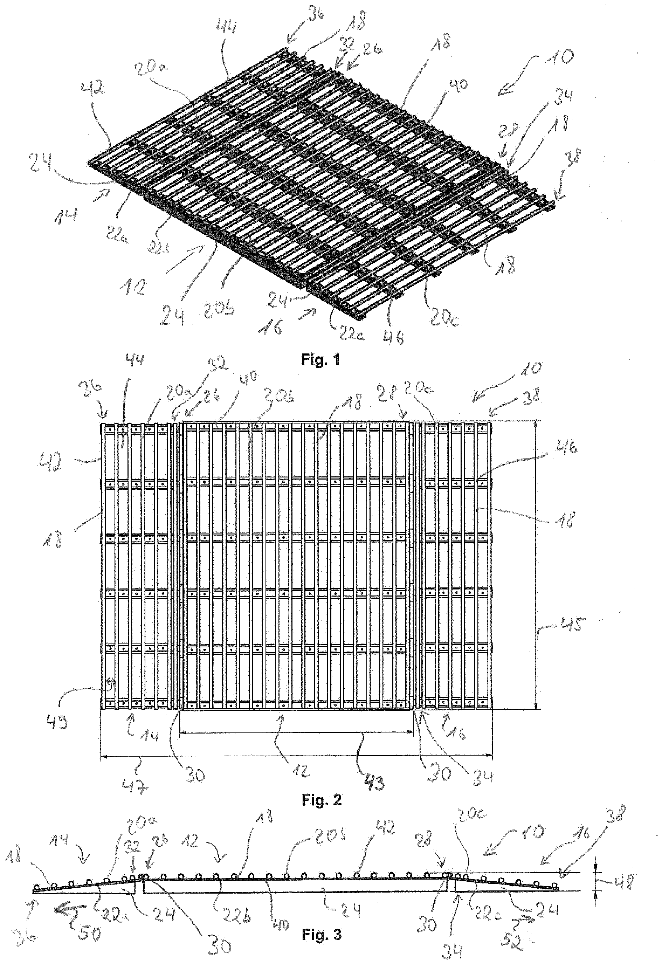

Fig. 1 shows an embodiment of the apparatus 10 in a perspective view. The apparatus 10 comprises the main grid section 12 and two side grid sections 14, 16. Each section comprises a grid 18 which forms a rectangular area or plane with an upper side 20a to 20c and a lower side 22a to 22c. An electrically insulating material 24 is arranged on the lower sides 20a to 20c of the grid of each section.

On two opposite ends 26, 28 of the main grid section 12 connections 30 are arranged to connect the side grid sections 14, 16 to the main grid section 12. The connections 30 are pivot joints. Thus, the side grid sections 14, 16 are arranged to be folded towards the main grid section 12 for a transport of the apparatus 10.

The grid 18 of each of the sections is formed by first steel bars 40 and second steel bars 42. The first steel bars 40 are flat steel bars extending between the respective opposite ends 26, 28; 32, 36; 34, 38 of the sections 12, 14, 16. The first steel bars 40 are flat steel bars and form on their lower side the lower side 22a to 22c of the grid. On the upper side of the first steel bars 40 the second steel bars 42 are arranged perpendicular to the first steel bars 40. The second steel bars 42 are round steel bars.

In the contact areas of the first steel bars 40 and the second steel bars 42, namely in their cross-sections 46, the steel bars 40, 42 are welded. The steel bars 40, 42 are arranged such that the clearance 44 between four of the cross-sections 46 of the steel bars have a minimum width of 10 cm.

Fig. 2 shows a top view of an embodiment of the apparatus 10. In this view, it can be seen in more detail that the plane area of each side section 14, 16 is smaller than the half area of the main section 12.

The main grid section 12 has a size 43 of at least 2.4 meters measured between the two opposite ends 26 and 28 of the main grid section 12. In the perpendicular direction of the plane formed by the main grid section 12, the size 45 of the main grid section is at least 3 meters.

The side grid sections 14, 16 each have a size of at least 0.8 meters measured between the respective end 32, 34 with the connection 30 to the opposite end 36, 38 of the respective side grid section. Therefore, the apparatus has a total width 47 of at least 4 meters. In the perpendicular direction of the plane formed by the side grid sections 14, 16, the size 45 of each side grid section is at least 3 meters.

Thus, the side actions can be folded such that the upper sides 20b, 20c of the side sections 14, 16 will be in contact with the upper side 20a of the main section 12. Further, the cross-sections 46 and the clearances 44 between the cross-sections 46 can be seen in more detail. The clearances have a minimum width 49 of 10 cm so that it is difficult for animals to balance on the bars.

Moreover, the insulating material 24 is formed as bars arranged on the lower side of the grid sections 12, 14, 16 in parallel to the first steel bars 40 and are connected with screws. The insulating material 24 is slightly broader than the first steel bars 40.

Fig. 3 shows a side view of an embodiment of the apparatus 10. In this view, it can be seen that the insulation material 24 has a substantially constant thickness in the main grid section 12. Further, the thickness of the insulating material 24 of each of the side grid sections 14, 16 decreases in direction 50, 52 beginning from the end 32, 34 of the connection 30 with the main grid section 12 to the opposite end 36, 38 of the side grid section 14, 16. The total height 48 of the apparatus is at least 12, preferably 14 cm.

### Reference numerals

- 10: Apparatus
- 12: Main grid section
- 14, 16: Side grid sections
- 18: Grid
- 20a to 20c: Upper side
- 22a to 22c: Lower side
- 24: Electrically insulating material
- 26, 28: Opposite ends of the main grid section
- 30: Connections
- 32, 34: Ends of side grid sections with connection to main grid section
- 36, 38: Opposite ends of the respective side grid section
- 40: First bars
- 42: Second bars
- 43: Width of the main grid
- 44: Clearance
- 45: Depth of the main grid
- 46: Cross sections
- 47: Total width of the apparatus
- 48: Total height of the apparatus
- 49: Minimum width of the clearance
- 50, 52: Direction

## Claims

1. Apparatus (10) for preventing animals to enter or leave a separated area through an opening of the separated area comprising
a grid (18) made from metal bars (40, 42), wherein the grid (18) is adapted to be energized and wherein the grid (18) has an upper side (20a to 20c) and a lower side (22a to 22c), and
an electrically insulating material (24) at least partly arranged on the lower side (22a to 22c) of the grid (18), wherein the insulating material (24) is arranged to completely separate the grid (18) from a ground at least during horizontal arrangement of the grid (18) on a horizontal ground,
wherein the grid (18) consists of a main grid section (12) and at least two side grid sections (14, 16), each comprising the electrically insulating material (24) arranged on its lower side (22a to 22c), wherein the main grid section (12) is arranged to be connectable with the side grid sections (14, 16) with connections (30) on each of two opposite ends (26, 28) of the main section (12), wherein the connections (30) between the main grid section (12) and the side grid sections (14, 16) are each pivot joints and wherein the thickness of the insulating material (24) in the main grid section (12) is substantially constant and the thickness of the insulating material (24) of each of said side grid sections (14, 16) decreases beginning from the end (32, 34) of the connection (30) with the main grid section (12) to the opposite end (36, 38) of the side grid section (14, 16).

2. Apparatus (10) according claim 1, wherein the connections (30) between the main grid section (12) and the side grid sections (14, 16) are each detachable connections.

3. Apparatus (10) according to claim 1 or 2, wherein the area of each side section (14, 16) is smaller than or equal to the half area of the main section (12).

4. Apparatus (10) according to any of the preceding claims, wherein the metal bars (40, 42) of the main grid section (12) and the side grid sections (14, 16) are a plurality of parallel arranged first steel bars (40), preferably flat steel bars, extending from one of said opposite ends (26, 32, 34) to the other of said opposite ends (28, 36, 38) of the respective section, and a plurality of parallel arranged second steel bars (42), preferably round steel bars, extending perpendicular to the first steel bars (40).

5. Apparatus (10) according to any of the preceding claims, wherein the cross-sections (46) of the first steel bars (40) with the second steel bars (42) are each connected by welding and/or wherein the grid (18) is made from steel, wherein the steel is galvanized, and/or the connections (30) are made from stainless steel.

6. Apparatus (10) according to any of the claims 4 or 5, wherein the insulating material (24) is formed as bars arranged on the lower side (22a to 22c) of the grid sections (12, 14, 16) in parallel to the first steel bars (40), preferably connected with screws or bolts.

7. Apparatus (10) according to any of the preceding claims, wherein the apparatus (10) comprises an energizer which is directly connected to the grid (18) or which is connected with an electric fence which is then connected to the grid (18).

8. Apparatus (10) according to any of the preceding claims, wherein the insulating material (24) is made from wood, preferably hard wood, particularly insutimber.

9. Apparatus (10) according to any of the preceding claims, wherein the apparatus (10) comprises a mesh which is electroconductive, wherein the mesh is adapted to be arranged below the grid (18) and has at least a plane area which is equal to or greater than the grid (18) or the main grid section (12), wherein the clearances of the mesh are smaller than the clearances of the grid (18).

10. Apparatus (10) according to any of the preceding claims, wherein the area of the main grid section (12) has a rectangular shape and a size of at least 2 by 2 meter, preferably at least 2 by 3 meter and/or
wherein clearances (44) formed between four of the cross-sections (46) of the steel bars (40, 42) have a minimum width (49) of 8, preferably 10 cm.

11. Apparatus (10) according to any of the preceding claims, wherein each of the areas of the side grid sections (14, 16) has a rectangular shape and a size of at least 0.5 by 2 meter, preferably at least 0.8 by 3 meter and/or
wherein clearances (44) formed between four of the cross-sections (46) of the steel bars (40, 42) have a minimum width (49) of 8, preferably 10 cm.

12. Method for preventing animals to enter or leave a separated area through an opening of the separated area comprising providing an apparatus (10) according to any of the preceding claims, wherein the apparatus (10) is positioned on the ground in the area of the opening of the separated area, and wherein the grid (18) of the apparatus (10) is energized with an energizer.

## Patentansprüche

1. Vorrichtung (10) zum Verhindern, dass Tiere einen abgetrennten Bereich durch eine Öffnung des abgetrennten Bereichs betreten oder verlassen, umfassend
ein Gitter (18), das aus Metallstäben (40, 42) hergestellt ist, wobei das Gitter (18) dazu angepasst ist, unter elektrische Spannung gesetzt zu werden, und wobei das Gitter (18) eine Oberseite (20a bis 20c) und eine Unterseite (22a bis 22c) aufweist, und
ein elektrisch isolierendes Material (24), das zumindest teilweise auf der Unterseite (22a bis 22c) des Gitters (18) angeordnet ist, wobei das isolierende Material (24) derart angeordnet ist, um das Gitter (18) vollständig, zumindest während der horizontalen Anordnung des Gitters (18) auf einem horizontalen Boden, vom Boden zu trennen,
wobei
das Gitter (18) aus einem Hauptgitterabschnitt (12) und mindestens zwei Seitengitterabschnitten (14, 16) besteht, die jeweils elektrisch isolierendes Material (24) aufweisen, das auf ihrer Unterseite (22a bis 22c) angeordnet ist, wobei der Hauptgitterabschnitt (12) derart angeordnet ist, um mit dem Seitengitterabschnitten (14, 16) mit Verbindungen (30) an jedem von zwei gegenüberliegenden Enden (26, 28) des Hauptgitterabschnitts (12) verbindbar zu sein, wobei die Verbindungen (30) zwischen dem Hauptgitterabschnitt (12) und den Seitengitterabschnitten (14, 16) jeweils Drehgelenke sind und wobei die Dicke des isolierenden Materials (24) im Hauptgitterabschnitt (12) im Wesentlichen konstant ist und die Dicke des isolierenden Materials (24) jedes der Seitengitterabschnitte (14, 16) vom Ende (32, 34) der Verbindung (30) mit dem Hauptgitterabschnitt (12) bis zum gegenüberliegenden Ende (36, 38) des Seitengitterabschnitts (14, 16) abnimmt.

2. Vorrichtung (10) nach Anspruch 1, wobei die Verbindungen (30) zwischen dem Hauptgitterabschnitt (12) und den Seitengitterabschnitten (14, 16) jeweils lösbare Verbindungen sind.

3. Vorrichtung (10) nach Anspruch 1 oder 2, wobei die Fläche jedes Seitenabschnitts (14, 16) kleiner oder gleich der halben Fläche des Hauptabschnitts (12) ist.

4. Vorrichtung (10) nach einem der vorhergehenden Ansprüche, wobei die Metallstäbe (40, 42) des Hauptgitterabschnitts (12) und der Seitengitterabschnitte (14, 16) eine Vielzahl von parallel angeordneten ersten Stahlstäben (40), vorzugsweise Flachstahlstäben, sind, die sich von einem der gegenüberliegenden Enden (26, 32, 34) zum anderen der gegenüberliegenden Enden (28, 36, 38) des jeweiligen Abschnitts erstrecken, und eine Vielzahl von parallel angeordneten zweiten Stahlstäben (42), vorzugsweise Rundstahlstäben, sich senkrecht zu den ersten Stahlstäben (40) erstrecken.

5. Vorrichtung (10) nach einem der vorhergehenden Ansprüche, wobei die Überschneidungen (46) der ersten Stahlstäbe (40) mit den zweiten Stahlstäben (42) durch Schweißen verbunden sind und/oder wobei das Gitter (18) aus Stahl hergestellt ist, wobei der Stahl verzinkt ist und/oder die Verbindungen (30) aus rostfreiem Stahl hergestellt sind.

6. Vorrichtung (10) nach einem der Ansprüche 4 oder 5, wobei das isolierende Material (24) als Stäbe ausgebildet ist, die auf der Unterseite (22a bis 22c) der Gitterabschnitte (12, 14, 16) parallel zu den ersten Stahlstäben (40), vorzugsweise mit Schrauben oder Bolzen, angeordnet sind.

7. Vorrichtung (10) nach einem der vorhergehenden Ansprüche, wobei die Vorrichtung (10) ein Weidezaungerät umfasst, das direkt mit dem Gitter (18) verbunden ist, oder das mit einem Elektrozaun verbunden ist, mit dem dann das Gitter (18) verbunden ist.

8. Vorrichtung (10) nach einem der vorhergehenden Ansprüche, wobei das isolierende Material (24) aus Holz, vorzugsweise Hartholz, insbesondere Insultimber, hergestellt ist.

9. Vorrichtung (10) nach einem der vorhergehenden Ansprüche, wobei die Vorrichtung (10) ein Netz aufweist, das elektrisch leitend ist, wobei das Netz angepasst ist, unter dem Gitter (18) angeordnet zu werden, wobei das Netz mindestens eine ebene Fläche aufweist, die gleich oder größer als das Gitter (18) oder der Hauptgitterabschnitt (12) ist, wobei die Zwischenräume des Netzes kleiner als die Zwischenräume des Gitters (18) sind.

10. Vorrichtung (10) nach einem der vorhergehenden Ansprüche, wobei die Fläche des Hauptgitterabschnitts (12) eine rechteckige Form und eine Größe von mindestens 2 mal 2 Metern, vorzugsweise mindestens 2 mal 3 Metern, aufweist und/oder
wobei Zwischenräume (44), die zwischen vier Überschneidungen (46) der Stahlstäbe (40, 42) gebildet werden, eine minimale Breite (49) von 8, vorzugsweise 10 cm, aufweisen.

11. Vorrichtung (10) nach einem der vorhergehenden Ansprüche, wobei jede der Flächen der Seitengitterabschnitte (14, 16) eine rechteckige Form und mindestens eine Größe von mindestens 0,5 mal 2 Metern, vorzugsweise mindestens 0,8 mal 3 Metern, aufweist und/oder
wobei Zwischenräume (44), die zwischen vier Überschneidungen (46) der Stahlstäbe (40, 42) eine minimale Breite (49) von 8, vorzugsweise 10 cm, aufweisen.

12. Verfahren zum Verhindern, dass Tiere einen abgetrennten Bereich durch eine Öffnung des abgetrennten Bereichs betreten oder verlassen, umfassend das Bereitstellen einer Vorrichtung (10) nach einem der vorhergehenden Ansprüche, wobei die Vorrichtung (10) auf dem Boden im Bereich der Öffnung des abgetrennten Bereichs positioniert wird, und wobei das Gitter (18) der Vorrichtung (10) mit einem Weidezaungerät unter Spannung gesetzt wird.

## Revendications

1. Appareil (10) pour empêcher des animaux d'entrer dans ou de quitter une zone séparée par une ouverture de la zone séparée comprenant
une grille (18) faite de barres métalliques (40, 42), dans lequel la grille (18) est adaptée pour être électrifiée et dans lequel la grille (18) a un côté supérieur (20a à 20c) et un côté inférieur (22a à 22c), et
un matériau isolant (24) électriquement agencé au moins partiellement sur le côté inférieur (22a à 22c) de la grille (18), dans lequel le matériau isolant (24) est agencé pour séparer complètement la grille (18) d'un sol, au moins pendant l'agencement horizontal de la grille (18) sur un sol horizontal,
dans lequel
la grille (18) se compose d'une section principale (12) de grille et d'au moins deux sections latérales (14, 16) de grille, comprenant chacune le matériau isolant (24) électriquement, agencé sur son côté inférieur (22a à 22c), dans lequel la section principale (12) de grille est agencée pour pouvoir être reliée aux sections latérales (14, 16) de grille avec des raccords (30) sur chacune de deux extrémités opposées (26, 28) de la section principale (12), dans lequel les raccords (30) entre la section principale (12) de grille et les sections latérales (14, 16) de grille sont chacun une articulation à pivot, et dans lequel l'épaisseur du matériau isolant (24) dans la section principale (12) de grille est sensiblement constante, et l'épaisseur du matériau isolant (24) de chacune desdites sections latérales (14, 16) de grille diminue en partant de l'extrémité (32, 34) du raccord (30) avec la section principale (12) de grille jusqu'à l'extrémité opposée (36, 38) de la section de grille latérale (14, 16).

2. Appareil (10) selon la revendication 1, dans lequel les raccords (30) entre la section principale (12) de grille et les sections latérales (14, 16) de grille sont chacun des raccords détachables.

3. Appareil (10) selon la revendication 1 ou 2, dans lequel la zone de chaque section latérale (14, 16) est inférieure ou égale à la moitié de la zone de la section principale (12).

4. Appareil (10) selon l'une quelconque des revendications précédentes, dans lequel les barres métalliques (40, 42) de la section principale (12) de grille et les sections latérales (14, 16) de grille sont une pluralité de premières barres d'acier (40) agencées parallèlement, de préférence des barres d'acier plates, s'étendant de l'une desdites extrémités opposées (26, 32, 34) à l'autre desdites extrémités opposées (28, 36, 38) de la section respective, et une pluralité de deuxièmes barres d'acier (42) agencées parallèlement, de préférence des barres d'acier rondes, s'étendant perpendiculairement aux premières barres d'acier (40).

5. Appareil (10) selon l'une quelconque des revendications précédentes, dans lequel les sections transversales (46) des premières barres d'acier (40) avec les deuxièmes barres d'acier (42) sont reliées chacune par soudage et/ou dans lequel la grille (18) est réalisée en acier, dans lequel l'acier est galvanisé, et/ou les raccords (30) sont réalisés en acier inoxydable.

6. Appareil (10) selon l'une quelconque des revendications 4 ou 5, dans lequel le matériau isolant (24) est sous la forme de barres agencées sur le côté inférieur (22a à 22c) des sections de grille (12, 14, 16) parallèlement aux premières barres d'acier (40), de préférence reliées par des vis ou des boulons.

7. Appareil (10) selon l'une quelconque des revendications précédentes, dans lequel l'appareil (10) comprend un électrificateur qui est directement relié à la grille (18) ou qui est relié à une clôture électrique qui est ensuite reliée à la grille (18).

8. Appareil (10) selon l'une quelconque des revendications précédentes, dans lequel le matériau isolant (24) est réalisé en bois, de préférence en bois dur, en particulier en insutimber.

9. Appareil (10) selon l'une quelconque des revendications précédentes, dans lequel l'appareil (10) comprend un treillis qui est électro conducteur, dans lequel le treillis est adapté pour être agencé sous la grille (18) et présente au moins une zone plate qui est supérieure ou égale à la grille (18) ou à la section principale (12) de grille, dans lequel les espaces du treillis sont plus petit que les espaces de la grille (18).

10. Appareil (10) selon l'une quelconque des revendications précédentes, dans lequel la zone de la section principale (12) de grille a une forme rectangulaire et une taille d'au moins 2 mètres par 2 mètres, de préférence d'au moins 2 mètres par 3 mètres et/ou
dans lequel les espaces (44) formés entre quatre des sections transversales (46) des barres d'acier (40, 42) ont une largeur minimale (49) de 8 cm, de préférence de 10 cm.

11. Appareil (10) selon l'une quelconque des revendications précédentes, dans lequel chacune des zones des sections latérales (14, 16) de grille a une forme rectangulaire et une taille d'au moins 0,5 mètre par 2 mètres, de préférence d'au moins 0,8 mètre par 3 mètres et/ou
dans lequel les espaces (44) formés entre quatre des sections transversales (46) des barres d'acier (40, 42) a une largeur minimale (49) de 8 cm, de préférence de 10 cm.

12. Procédé pour empêcher des animaux d'entrer dans ou de quitter une zone séparée par une ouverture de la zone séparée, comprenant la fourniture d'un appareil (10) selon l'une quelconque des revendications précédentes, dans lequel l'appareil (10) est positionné sur le sol dans la zone de l'ouverture de la zone séparée, et dans lequel la grille (18) de l'appareil (10) est électrifiée avec un électrificateur.
